(19) Europäisches Patentamt / European Patent Office / Office européen des brevets

(11) **EP 2 996 913 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **14722242.6**

(22) Anmeldetag: **09.05.2014**

(51) Int Cl.:
**B60T 8/52** *(2006.01)*      **B60T 17/22** *(2006.01)*

(86) Internationale Anmeldenummer:
**PCT/EP2014/059563**

(87) Internationale Veröffentlichungsnummer:
**WO 2014/184110 (20.11.2014 Gazette 2014/47)**

(54) **VERFAHREN UND VORRICHTUNG ZUM BESTIMMEN EINES BREMSMOMENTS AN EINER BREMSANLAGE FÜR EIN SCHIENENFAHRZEUG**

METHOD AND DEVICE FOR DETERMINING A BRAKING TORQUE ON A BRAKING SYSTEM FOR A RAIL VEHICLE

PROCÉDÉ ET DISPOSITIF POUR DÉTERMINER UN COUPLE DE FREINAGE DANS UN SYSTÈME DE FREINAGE POUR UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2013 DE 102013008227**

(43) Veröffentlichungstag der Anmeldung:
**23.03.2016 Patentblatt 2016/12**

(73) Patentinhaber: **KNORR-BREMSE Systeme für Schienenfahrzeuge GmbH**
**80809 München (DE)**

(72) Erfinder:
• **MATHIEU, Michael**
**82178 Puchheim (DE)**
• **GREPL, Roman**
**80935 München (DE)**
• **FUDERER, Erich**
**82256 Fürstenfeldbruck (DE)**
• **SCHUBERT, Michael**
**80335 München (DE)**
• **ELSTORPFF, Marc-Gregory**
**80638 München (DE)**
• **LANG, Rupert**
**92287 Schmidmühlen (DE)**

(56) Entgegenhaltungen:
EP-A1- 1 640 233     WO-A2-2009/118350
DE-C1- 4 425 598

**Beschreibung**

Die vorliegende Erfindung bezieht sich auf Verfahren zum Bestimmen eines Bremsmoments, ein entsprechendes Verfahren zum Ausgeben eines Bremssignals, welches das Bremsmoment verwendet sowie eine Vorrichtung zum Bestimmen des Bremsmoments und eine Vorrichtung zum Ausgeben des Bremssignals an eine Bremsanlage für ein Schienenfahrzeug.

Bei Bremsanlagen von Schienenfahrzeugen schwanken die Reibbedingungen zwischen Rad oder Radsatz und Schiene beziehungsweise zwischen der Bremsscheibe und dem der Bremsscheibe zugeordneten Bremsbelag abhängig von der Witterung, Umgebungstemperatur, Verschleißzustand und Belastungsprofil teilweise erheblich. Soll nun ein auf einen Radsatz eines Schienenfahrzeuges wirkendes Bremsmoment geregelt werden, so sollte das durch eine Bremszange einer Bremsanlage erzeugt Bremsmoment mit ausreichender Genauigkeit gemessen werden. Das Bremsmoment, welches an einer Bremsscheibe erzeugt wird, ist jedoch von verschiedensten Faktoren abhängig wie beispielsweise einer Anpresskraft zwischen Belägen und Bremsscheibe, einem Reibwert zwischen dem Bremsbelag und einer Bremsscheibe oder einem Reibradius, der den Abstand der resultierenden Reibkraft von der Achse des Radsatzes repräsentiert.

Da sowohl eine lokale Flächenpressung zwischen dem Bremsbelag und der Bremsscheibe als auch der Reibwert des Bremsbelags auf der Bremsscheibe von einer Vielzahl von (lokal teilweise sehr unterschiedlichen) Faktoren abhängig sind, ist auch der Reibradius keine feste, unveränderliche Größe, die jedoch für die Regelung des aufzubringenden Bremsmomentes erforderlich ist. Vielmehr kommt es bei aufeinanderfolgenden Bremsungen zu Schwankungen des Reibradius, die nicht zu vernachlässigen sind. Als Ursachen kommen beispielsweise unterschiedliche Ausgangstemperaturen von Bremsscheibe und Bremsbelag, eine unterschiedliche Ausgangsgeschwindigkeit, ein sich veränderndes Tragbild des Bremsbelages aufgrund von thermischen Verformungen und/oder Verschleiß von Bremsscheibe und Bremsbelag in Betracht.

Das auf eine Bremsscheibe wirkende Bremsmoment entspricht im Allgemeinen dem Produkt aus Anpresskraft der Bremsbeläge auf die Bremsscheibe, dem Reibwert zwischen dem Bremsbelag und der Bremsscheibe und dem aktuellen (gegebenenfalls schnell veränderlichen) Reibradius.

Wird nur die Umfangskraft gemessen, die einer der auf die Bremsscheibe wirkenden Reibkraft entspricht, und der Reibradius als konstant vorausgesetzt, so kann das Bremsmoment nur relativ ungenau erfasst werden.

In der Druckschrift WO 2009/118350 A2 wird beschrieben, wie ein oder mehrere Sensoren an einer Bremszangeneinheit anzubringen sind, um die Reibkraft zwischen Belag und Bremsscheibe zu messen. Vergrößert sich der Reibradius bei gleichbleibender Reibkraft, so wird das Bremsmoment in der Realität größer, während die Reibkraftmessung keine Veränderung der Reibkraft registriert. Wird nur ein Sensor verwendet, so würde sogar eine Reduzierung der Reibkraft und damit eine Reduzierung des Bremsmomentes ermittelt werden was im Regelkreis zu einer "Korrektur" in falsche Richtung führen würde. Aufgrund der in der Druckschrift WO 2009/118350 A2 beschriebenen Vorgehensweise ist es nicht möglich, die Verzögerungskraft am Fahrzeug mit hoher Genauigkeit zu berechnen.

In der WO 2010/069520 wird ein Verfahren zur Regelung der Bremskraft bzw. des Bremsmomentes beschrieben.

Die EP 0777598B1 offenbart eine Bremszangeneinheit für Scheibenbremsen von Fahrzeugen, insbesondere Schienenfahrzeugen, wobei ein Exzentergetriebe zum Einsatz kommt.

Die Druckschrift DE 44 25 598 C offenbart eine Vorrichtung für die automatische Bremskraftermittlung im Stillstand oder während der Fahrt an Bremsscheiben von Schienenfahrzeugen.

Es ist die Aufgabe der vorliegenden Erfindung eine Möglichkeit zur verbesserten Ermittlung eines Bremsmomentes und somit zur Steuerung einer Bremskraft mit hoher Genauigkeit zu schaffen.

Diese Aufgabe wird durch ein Verfahren zum Bestimmen eines Bremsmoments an einer Bremsanlage für ein Schienenfahrzeug, ein Verfahren zum Ausgeben eines Bremssignals für eine Bremskraft an einer Bremsanlage für ein Schienenfahrzeug, eine Vorrichtung zum Bestimmen eines Bremsmoments an einer Bremsanlage für ein Schienenfahrzeug sowie Vorrichtung zum Ausgeben eines Bremssignals für eine Bremskraft an einer Bremsanlage für ein Schienenfahrzeug gemäß den unabhängigen Hauptansprüchen gelöst. Vorteilhafte Weiterbildungen ergeben sich aus den jeweiligen Unteransprüchen und aus der Beschreibung.

Der hier vorgestellte Ansatz schafft ein Verfahren zum Bestimmen eines Bremsmoments an einer Bremsanlage für ein Schienenfahrzeug, wobei die zumindest einem Rad oder zumindest einem Radsatz zugeordnete Bremsanlage zum Erzeugen einer Bremskraft auf ein Bremssignal hin zumindest eine Bremsscheibe, zumindest einen mit der Bremsscheibe zusammenwirkenden Bremsbelag sowie eine mit dem Bremsbelag verbundene Bremszange sowie ein Bremsgehäuse umfasst, wobei die Bremszange mit einem Bremsgehäuse an zumindest einer ersten Lagerstelle und einer zweiten Lagerstelle gelagert ist, wobei die zweite Lagerstelle in einem vordefinierten Lagerabstand von der ersten Lagerstelle beabstandet ist, wobei an der Bremsanlage ein erster Sensor zum Bereitstellen eines ersten Messsignals und zumindest ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren. Das Verfahren umfasst die folgenden Schritte:

> Einlesen des ersten Messsignals und des zweiten Messsignals; und
> Ermitteln eines Bremsmoments unter Verwendung eines Einbaumaßes, des Lagerabstands sowie des ersten Messsignals und des zweiten Messsignals, wobei das Einbaumaß dem Abstand zwischen einer Drehachse der Bremsscheibe und der ersten Lagerstelle entspricht.

Schienenfahrzeuge weisen zur Verzögerung oder Bremsung zumindest eine Bremse auf. Unter einem Schienenfahrzeug kann im Allgemeinen ein spurgebundenes Fahrzeug verstanden werden, wie eine Lokomotive, ein Triebzug, ein Triebwagen, eine Straßenbahn, ein U-Bahn-Fahrzeug, ein Waggon wie ein Personenbzw. Reisezug- und/oder Güterwagen. Die Bremse kann auf eine Bremsscheibe eines Rads oder eines Radsatzes wirken. Dabei kann die Bremse mit einem Rad, einem Radsatz oder einer Mehrzahl von Rädern wirkverbunden sein. Der Einfachheit der Beschreibung halber und um die Lesbarkeit zu verbessern, wird im Nachfolgenden der hier vorgestellte Ansatz nur anhand eines Rades beschrieben, auch wenn der hier vorgestellte Ansatz an mehreren Rädern oder einem Radsatz oder mehreren Radsätzen ausgeführt werden kann. Die Bremse kann aus einer Mehrzahl von Bauteilen oder Elementen aufgebaut sein, insbesondere kann die Bremse eine Bremsscheibe, zumindest einen mit der Bremsscheibe wirkenden Bremsbelag, eine Bremszange, die wirkverbunden mit dem Bremsbelag ist sowie einen Krafterzeuger umfassen. Die Bremszange kann mittels zweier Lagerstellen mit einer Konsole schwenkbar verbunden sein, wobei die zwei Lagerstellen in einem Lagerabstand voneinander angeordnet sind. Die Bremsscheibe weist eine Drehachse auf, die einen Abstand zu der (näheren) ersten der zwei Lagerstellen aufweist, wobei dieser Abstand als Einbaumaß bezeichnet werden kann. Dabei kann unter dem Einbaumaß ein horizontaler Abstand bezogen auf den Einbau verstanden werden. Die Konsole kann mit einem Chassis des Schienenfahrzeugs fest verbunden sein. Eine Betätigung der Bremse kann ansprechend auf ein Bremssignal erfolgen. Das Bremssignal kann ein Bremsanforderungssignal oder ein Signal einer Bremsanforderung darstellen. Bei einer Betätigung der Bremse kann ein Reibelement der Bremse, beispielsweise der Bremsbelag, einer bei der Drehung des Rades in Radumfangs- bzw. Radbewegungsrichtung des Rades oder Radsatzes des Schienenfahrzeuges wirkenden Radumfangskraft entgegen wirken. Auf diese Weise kann ein Bremsmoment von dem Bremsbelag auf die Bremsscheibe und somit auf das Rad erzeugt werden. Eine der Radumfangskraft entgegenwirkende Kraft kann eine Verformung zumindest eines Bremselements bewirken. Die Verformung kann in einem Abschnitt des Bremselements bestimmt werden. Bei der Betätigung der Bremse kann ein Bremsbelag, der über die Bremszange mit dem Krafterzeuger wirksam verbunden ist, auf die Bremsscheibe gedrückt werden. Eine zwischen der Bremsscheibe und dem Bremsbelag wirkende Reibkraft kann hierzu im Gleichgewicht Kräfte in der Bremszange und auf die zwei Lager der Bremszange bewirken. Hierdurch wird die Bremszange verformt. An der Bremszange sind ein erster Sensor und ein zweiter Sensor angeordnet. Der erste Sensor kann ein erstes Messsignal bereitstellen, welches eine erste Kraft, eine erste Lagerkraft an der ersten Lagerstelle oder eine hiervon abgeleitete Größe repräsentiert. Ergänzend kann der zweite Sensor ein zweites Messsignal bereitstellen, welches eine zweite Kraft, eine zweite Lagerkraft an der zweiten Lagerstelle oder eine hiervon abgeleitete Größe repräsentiert. Bei dem ersten Sensor und gleichzeitig oder alternativ dem zumindest zweiten Sensor kann es sich um einen Messbolzen oder alternativ um ein Messelement handeln.

Der hier vorgestellte Ansatz basiert auf der Erkenntnis, dass durch eine bekannte geometrische Anordnung von bestimmten Sensoren und deren Aufhängungsorten in Verbindung mit den tatsächlich von den Sensoren gemessenen Größen sehr präzise ein Bremsmoment ermittelt werden kann. Dieses Bremsmoment kann auch sehr präzise während der Fahrt ermittelt werden, auch wenn beispielsweise durch Änderungen einer Wirkung der Bremskraft sich die örtliche Lage der Sensoren in Bezug zu beweglichen Teilen wie der Achse der Räder bzw. der Bremsscheibe ändern kann. Beispielsweise kann unter Verwendung des hier vorgestellten Ansatzes eine Änderung des Reibradius ermittelt werden. Der - theoretische - Angriffspunkt des Bremsbelags an der Bremsscheibe kann durch äußere Einflüsse bzw. Umwelt-Einflüsse beeinflusst werden. Der Reibradius kann sich auch durch eine Veränderung des Abstandes zwischen dem Angriffspunkt des Bremsbelags an der Bremsscheibe und der Achse des Rades, bzw. resultierende Angriffspunkt, aufgrund der Hebelwirkung in einer Änderung des von der Bremse auf das Rad ausgeübten Bremsmomentes widerspiegeln. Lässt sich nun das Bremsmoment hochpräzise bestimmen, kann auch eine sehr präzise Nachregelung des Bremsmomentes bzw. einer auf die Bremsscheibe auszuübenden Kraft während der Fahrt des Schienenfahrzeugs erfolgen.

Der hier vorgestellte Ansatz bietet somit den Vorteil, durch die Ausnutzung von geometrischen Zusammenhängen und einer geringen Anzahl von einfach herzustellenden und zu verbauenden Sensoren ein aktuell auf ein Rad wirkendes Bremsmoment hochpräzise ermitteln zu können und dieses Bremsmoment für eine sehr präzise Regelung der Ansteuerung der Bremse verwenden zu können. Hierdurch lässt sich vorteilhaft eine sehr genaue und dosierte Bremsung des Schienenfahrzeugs erreichen, die ohne den Einsatz des hier vorgestellten Ansatzes nicht erreichbar wäre.

Günstig ist es auch, wenn in einer Ausführungsform der vorliegenden Erfindung das erste Messsignal eine der ersten Lagerstelle zugeordnete erste Lagerkraft und das zweite Messsignal eine der zweiten Lagerstelle zugeordnete zweite Lagerkraft repräsentiert. Unter einer Lagerkraft kann eine Kraft verstanden werden, die von der Bremszange auf ein an einer entsprechenden Lagerstelle angeordnetes Lager ausgeübt wird. An den zwei Lagerstellen, mit denen die Bremszange mit der Konsole verbunden ist, kann mittels je einem Kraftmessbolzen die Bremszange mit der Konsole verbunden sein. Bei einem Betätigen der Bremse können die zwei Kraftmessbolzen je ein Messsignal ausgeben, welches die Lagerkräfte repräsentiert. Eine solche Ausführungsform der vorliegenden Erfindung bietet den Vorteil, dass durch die genaue Kenntnis der beiden Lagerkräfte in Verbindung mit dem vorbekannten Abstand zwischen den zwei Lagerstellen durch Ausnutzung von mechanischen Zusammenhängen, insbesondere des Hebelgesetzes, ein Rückschluss auf das Bremsmoment möglich wird, welches von der Bremsanlage auf das Rad ausgeübt wird.

Entsprechend einer Ausführungsform der vorliegenden Erfindung repräsentiert das erste Messsignal und das zweite Messsignal je eine Verformung der Bremsanlage. Unter dem Verformen der Bremsanlage kann ein Verformen der Bremszange oder weiterer Bremselemente verstanden werden. Unter einem Verformen der Bremsanlage kann eine Verbiegung der Bremsanlage oder eines Teils davon verstanden werden, die durch eine Kraft verursacht wird, welche durch die Drehung der Bremsscheibe auf einen an die Bremsscheibe gedrückten Bremsbelag resultiert. Bei einem Betätigen der Bremse kann somit eine Reibkraft, die zwischen der Bremsscheibe und dem Bremsbelag wirkt, die Bremsanlage verformen. Entsprechende Sensoren, deren Anordnungspositionen in der Bremsanlage bekannt sind, können einen Verformungszustand der Bremsanlage und gleichzeitig oder alternativ eine Spannung in der Bremsanlage an zwei Positionen messen und ein Signal ausgeben, welches die Verformung der Bremsanlage repräsentiert. In einer Ausführungsform kann zumindest ein Messelement an der Bremszange der Bremsanlage angeordnet sein, um das erste und/oder das zweite Messsignal bereitzustellen. In einer Ausführungsform kann zumindest ein Messelement an oder in dem Gehäuse oder einem anderen Element der Bremsanlage angeordnet sein, um das erste und/oder das zweite Messsignal bereitzustellen. Es kann in einer Ausführungsform eine Zuspannkraft ermittelt werden. Eine Ausführungsform der vorliegenden Erfindung bietet den Vorteil, dass die Verwendung einer vorbekannten Elastizität oder Steifigkeit der Bremsanlage, der Bremszange oder eines weiteren Bremselements zusätzlich ausgenutzt werden kann, um das Bremsmoment zu bestimmen. Hierdurch lässt sich durch die Verwendung eines (zusätzlichen) weiteren Parameters eine sehr hohe Genauigkeit bei der Bestimmung des Bremsmoments erzielen.

Ferner kann auch im Schritt des Ermittelns eine Reibkraft unter Verwendung des ersten Messsignals und des zweiten Messsignals ermittelt werden. Günstig ist es auch, wenn im Schritt des Ermittelns eine Anpresskraft des Bremsbelags auf die Bremsscheibe unter Verwendung des ersten Messsignals und des zweiten Messsignals ermittelt wird, insbesondere wenn sich die Bremsscheibe nicht in Rotation befindet, und im Stillstand keine Reibkraft übertragen wird. Wenn die Messsignale je eine Lagerkraft repräsentieren, können beispielsweise das erste und das zweite Messsignal aufsummiert werden, um einen Wert zu erhalten, der die Reibkraft repräsentiert. Beispielsweise kann durch ein solches Vorgehen die bei einer Bremsung an den beiden Halterungen des Bremsbelags auftretende Reibkraft aus der Summe der beiden gemessenen Lagerkräfte, insbesondere unter Beachtung der Vorzeichen, sehr leicht ermittelt werden. Dabei kann das Vorzeichen der ermittelten Reibkraft dann abhängig von der Fahrtrichtung sein. Eine solche Ausführungsform der vorliegenden Erfindung bietet den Vorteil, dass die Reibkraft, die zur Bremsung des Rads führt, sehr genau und technisch einfach bestimmt werden kann. Die somit erhaltene Reibkraft kann dann unter Ausnutzung von mechanischen Gesetzmäßigkeiten sehr einfach zur Bestimmung des Bremsmoments verwendet werden.

Auch ist es günstig, wenn gemäß einer Ausführungsform der vorliegenden Erfindung im Schritt des Ermittelns ein Reibradius unter Verwendung des Einbaumaßes, des Lagerabstands sowie des ersten Messsignals und des zweiten Messsignals ermittelt wird. Das Einbaumaß und der Lagerabstand sind durch die Konstruktion der Bremsanlage bekannt und können als konstant betrachtet werden. Die vorliegende Erfindung bietet daher den Vorteil, dass ebenfalls durch Ausnutzung von mechanischen Gesetzmäßigkeiten das Bremsmoment technisch sehr einfach bestimmt werden kann. Es kann beispielsweise ein Quotient aus einem Messsignal, insbesondere dem zweiten Messsignal, und der Summe des ersten Messsignals und des zweiten Messsignals gebildet werden. Beispielsweise kann der Quotient dann mit dem Lagerabstand multipliziert werden, um den Abstand zwischen einer Lagerstelle, insbesondere der ersten Lagerstelle und dem resultierenden Angriffspunkt der Reibkraft zu erhalten. Wenn den aus dem Lagerabstand und dem Quotienten aus dem zweiten Messsignal und der Summe der beiden Messsignale bestimmten Abstand von dem Einbaumaß subtrahiert werden, kann direkt ein Wert für den Reibradius bestimmt werden. Da der Abstand zwischen der ersten Lagerstelle der Bremszange und der Drehachse der Bremsscheibe (d. h. das Einbaumaß) und der Lagerabstand der Aufhängungspunkte der Bremszange bekannt sind, kann der momentan wirksame Reibradius R beispielsweise gemäß der nachfolgenden Gleichung berechnet werden:

$$R = X_0 - A * F_2/F_R,$$

wobei die Variable R den Reibradius, die Variable A den Lagerabstand, die Variable $X_0$ das Einbaumaß, die Variable $F_2$ die zweite Lagerkraft und die Variable $F_R$ die Reibkraft repräsentiert. Eine derartige Ausführungsform der vorliegenden Erfindung bietet den Vorteil durch die Ausnutzung eines einfachen mechanischen Zusammenhangs den Reibradius sehr präzise zu bestimmen, und hierdurch auch das Bremsmoment sehr präzise zu bestimmen.

Gemäß einer Ausführungsform kann im Schritt des Einlesens eine Information über eine Längenänderung des Einbaumaßes und gleichzeitig oder alternativ eine Information über eine Änderung einer Position einer Achse des Rades in einem Toleranzbereich senkrecht zur Erstreckungsrichtung des Einbaumaßes und bei dem im Schritt des Ermittelns das Bremsmoment und gleichzeitig oder alternativ die Reibkraft und gleichzeitig oder alternativ der Reibradius unter Verwendung der Information über eine Längenänderung und gleichzeitig oder alternativ der Information über eine Änderung einer Position ermittelt werden. Unter einer Erstreckungsrichtung des Einbaumaßes kann eine Messrichtung des Einbaumaßes verstanden werden. Unter einer Änderung einer Position der Achse des Rads in einem Toleranzbereich senkrecht zur Erstreckungsrichtung des Einbaumaßes kann eine Veränderung der Achsposition des Rads in eine Richtung verstanden werden, die von der Erstreckungsrichtung abweicht. Insbesondere kann somit eine vertikale Veränderung der Position der Radachse hierunter verstanden werden, wenn die Erstreckungsrichtung in eine horizontale Richtung, das heißt, im Wesentlichen parallel zu einem Schienenverlauf ausgerichtet ist, auf dem das Schienenfahrzeug fährt. Um eine Information über eine Längenänderung des Einbaumaßes und gleichzeitig oder alternativ eine Information über eine Änderung einer Position einer Achse des Rades in einem Toleranzbereich senkrecht zur Erstreckungsrichtung des Einbaumaßes einlesen zu können, kann zumindest eine Information eines zusätzlichen Sensors, beispielsweise eines Längensensors, eingelesen werden. Um die Genauigkeit bei der Ermittlung des Bremsmomentes weiter zu erhöhen, können gemäß einer solchen Ausführungsform der vorliegenden Erfindung vorteilhaft die Relativbewegungen der Bremsscheibe während des Fahrbetriebes berücksichtigt werden. Wegen der Primärfederung zwischen Rad oder Radsatz und Drehgestellrahmen kann sich das Rad oder der Radsatz je nach Beladungszustand in vertikaler Richtung relativ zum Rahmen verschieben. Zusätzlich oder alternativ können elastische Achslager, beispielsweise mit Gummifedern, auch eine Verschiebung in Fahrzeuglängsrichtung und in Querrichtung zulassen. Dadurch bedingt ändert sich zwangsläufig die Position der Bremsscheibe relativ zur Bremszange. Der Einfluss dieser Achsbewegung beziehungsweise Achsbewegungen relativ zur Bremszange kann in der Berechnung des Bremsmomentes berücksichtigt werden, wenn die Relativbewegung der Bremsscheibe bekannt ist. Werden an beiden Achslagern die Bewegungen des Radsatzes in eine, in zwei oder in alle drei Richtungen beispielsweise durch geeignete Wegsensoren aufgenommen, so kann für die Position der Bremsscheibe auf der Achse vergleichsweise einfach die Relativbewegung errechnet werden. Hierzu können die geometrischen Veränderungen durch die Achsverschiebung der Bremsscheibe in Bezug auf die erste Lagerstelle und die zweite Lagerstelle bestimmt und deren Auswirkung auf die Bestimmung der Kräfte oder Momente berücksichtigt werden.

Ferner wird durch den hier vorgestellten Ansatz ein Verfahren zum Ausgeben eines Bremssignals für eine Bremskraft an einer Bremsanlage für ein Schienenfahrzeug vorgestellt, wobei die zumindest einem Rad oder zumindest einem Radsatz zugeordnete Bremsanlage zum Erzeugen einer Bremskraft auf ein Bremssignal hin zumindest eine Bremsscheibe, zumindest einen mit der Bremsscheibe zusammenwirkenden Bremsbelag sowie eine mit dem Bremsbelag verbundene Bremszange umfasst, wobei die Bremszange mit einem Bremsgehäuse an zumindest einer ersten Lagerstelle und einer zweiten Lagerstelle gelagert ist, wobei die zweite Lagerstelle in einem vordefinierten Lagerabstand von der ersten Lagerstelle beabstandet ist, wobei an der Bremszange ein erster Sensor zum Bereitstellen eines ersten Messsignals und ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren. Das Verfahren zum Ausgeben eines Bremssignals für eine Bremskraft an einer Bremsanlage für ein Schienenfahrzeug umfasst die folgenden Schritte:

Einlesen eines Bremsmoments, welches mit einer Variante des hier vorgestellten Verfahrens zum Bestimmen eines Bremsmoments an einer Bremsanlage für ein Schienenfahrzeug bestimmt wurde, und

Bestimmen einer Bremskraft unter Verwendung eines gewünschten Sollbremsmoments und dem eingelesenen Bremsmoment, um ein Bremssignal auszugeben.

Günstig ist es auch, wenn im Schritt des Bestimmens die Bremskraft unter Verwendung einer Reibkraft bestimmt wird. Eine zusätzliche Größe wie die Reibkraft kann eine robustere und gleichzeitig oder alternativ schnellere Regelung der während der Fahrt des Schienenfahrzeugs auszuübenden Bremskraft beziehungsweise der Bestimmung einer solchen Bremskraft ermöglichen, als dies durch bisherige Ansätze erreichbar war.

In einer zusätzlichen Weiterbildung des angegebenen Verfahrens zum Ausgeben eines Bremssignals kann im Schritt des Bestimmens die Bremskraft unter Verwendung eines Reibradius bestimmt werden. Durch ein Ausnutzen der Hebelwirkung des Bremsradius kann die Bremskraft schneller oder robuster bestimmt werden, insbesondere da hierdurch Änderungen des Bremsradius sehr schnell erkannt und bei der Bestimmung der aktuell erforderlichen Bremskraft berücksichtigt werden können.

Es wird vorliegend ferner eine Vorrichtung zum Bestimmen eines Bremsmoments an einer Bremsanlage für ein Schienenfahrzeug vorgestellt, wobei die zumindest einem Rad oder zumindest einem Radsatz zugeordnete Bremsanlage zum Erzeugen einer Bremskraft auf ein Bremssignal hin zumindest eine Bremsscheibe, zumindest einen mit der Bremsscheibe zusammenwirkenden Bremsbelag sowie eine mit dem Bremsbelag verbundene Bremszange umfasst, wobei die Bremszange über das Bremsgehäuse an zumindest einer ersten Lagerstelle und einer zweiten Lagerstelle gelagert ist, wobei die zweite Lagerstelle in einem vordefinierten Lagerabstand von der ersten Lagerstelle beabstandet ist, wobei an dem Bremsgehäuse ein erster Sensor zum Bereitstellen eines ersten Messsignals und ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren, wobei die Vorrichtung die folgenden Schritte aufweist:

eine Schnittstelle zum Einlesen des ersten Messsignals und des zweiten Messsignals; und

eine Einrichtung zum Ermitteln eines Bremsmoments unter Verwendung eines Einbaumaßes, des Lagerabstands sowie des ersten Messsignals und des zweiten Messsignals, wobei das Einbaumaß dem Abstand zwischen einer Drehachse der Bremsscheibe und der ersten Lagerstelle entspricht.

Somit wird vorliegend eine Vorrichtung zum Bestimmen eines Bremsmoments an einer Bremsanlage für ein Schienenfahrzeug vorgestellt, die ist ausgebildet, um die Schritte des Verfahrens zum Bestimmen eines Bremsmoments an einer Bremsanlage für ein Schienenfahrzeug in entsprechenden Schnittstellen und/oder Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Es wird ferner eine Vorrichtung zum Ausgeben eines Bremssignals für eine Bremskraft an einer Bremsanlage für ein Schienenfahrzeug vorgestellt, wobei die zumindest einem Rad oder zumindest einem Radsatz zugeordnete Bremsanlage zum Erzeugen einer Bremskraft auf ein Bremssignal hin zumindest eine Bremsscheibe, zumindest einen mit der Bremsscheibe zusammenwirkenden Bremsbelag sowie eine mit dem Bremsbelag verbundene Bremszange umfasst, wobei die Bremszange über das Bremsgehäuse an zumindest einer ersten Lagerstelle und einer zweiten Lagerstelle gelagert ist, wobei die zweite Lagerstelle in einem vordefinierten Lagerabstand von der ersten Lagerstelle beabstandet ist, wobei an der Bremszange ein erster Sensor zum Bereitstellen eines ersten Messsignals und ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren, wobei die Vorrichtung die folgenden Schritte aufweist:

eine Schnittstelle zum Einlesen eines Bremsmoments; und

eine Einrichtung zum Bestimmen einer Bremskraft unter Verwendung eines vorbestimmten Sollbremsmoments und dem eingelesenen Bremsmoment, um ein Bremssignal auszugeben.

Durch eine Ausführungsform der Erfindung in Form einer Vorrichtung zum Ausgeben eines Bremssignals für eine Bremskraft an einer Bremsanlage für ein Schienenfahrzeug kann die zugrunde liegende Aufgabe schnell und effizient gelöst werden. Dabei ist eine Vorrichtung zum Ansteuern eines Bremssignals für eine Bremskraft an einer Bremsanlage für ein Schienenfahrzeug ausgebildet, die Schritte des Verfahrens zum Ansteuern eines Bremssignals für eine Bremskraft an einer Bremsanlage für ein Schienenfahrzeug in entsprechenden Schnittstellen und/oder Einrichtungen durchzuführen bzw. umzusetzen.

Unter einer Vorrichtung kann vorliegend ein elektrisches Gerät verstanden werden, das Sensorsignale einliest, verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn der Programmcode auf einem Computer oder einer Vorrichtung ausgeführt wird. Somit können die in dem Programmcode definierten Schritte des Verfahrens von Einrichtungen des Computers oder der Vorrichtung umgesetzt werden.

Bevorzugte Ausführungsbeispiele der vorliegenden Erfindung werden nachfolgend Bezug nehmend auf die beiliegenden Zeichnungen näher erläutert. Es zeigen:

Fig. 1      eine schematische Seitenansichtsdarstellung einer Bremsanlage für ein Schienenfahrzeug zur Verwendung in einem Ausführungsbeispiel der vorliegenden Erfindung;

Fig. 2      eine schematische Aufsichtsdarstellung einer Bremsanlage für ein Schienenfahrzeug zur Verwendung in einem Ausführungsbeispiel der vorliegenden Erfindung;

Fig. 3a bis 3c      je eine schematische Darstellung einer Bremsanlage für ein Schienenfahrzeug zur Verwendung in einem Ausführungsbeispiel der vorliegenden Erfindung;

Fig. 4a bis 4b      je eine schematische Darstellung einer Bremsanlage für ein Schienenfahrzeug zur Verwendung in einem Ausführungsbeispiel der vorliegenden Erfindung;

Fig. 5      eine schematische Darstellung einer Bremsanlage mit potenzieller Achsbewegung der Bremsscheibe in Bezug zur Konsole für ein Schienenfahrzeug zur Verwendung in einem Ausführungsbeispiel der vorliegenden Erfindung;

Fig. 6      ein Ablaufdiagramm eines Verfahrens zum Bestimmen eines Bremsmoments an einer Bremsanlage für ein Schienenfahrzeug zur Verwendung in einem Ausführungsbeispiel der vorliegenden Erfindung; und

Fig. 7      ein Ablaufdiagramm eines Verfahrens zum Ansteuern eines Bremssignals für eine Bremskraft an einer Bremsanlage für ein Schienenfahrzeug zur Verwendung in einem Ausführungsbeispiel der vorliegenden Erfindung;

In der nachfolgenden Beschreibung der günstigen Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird.

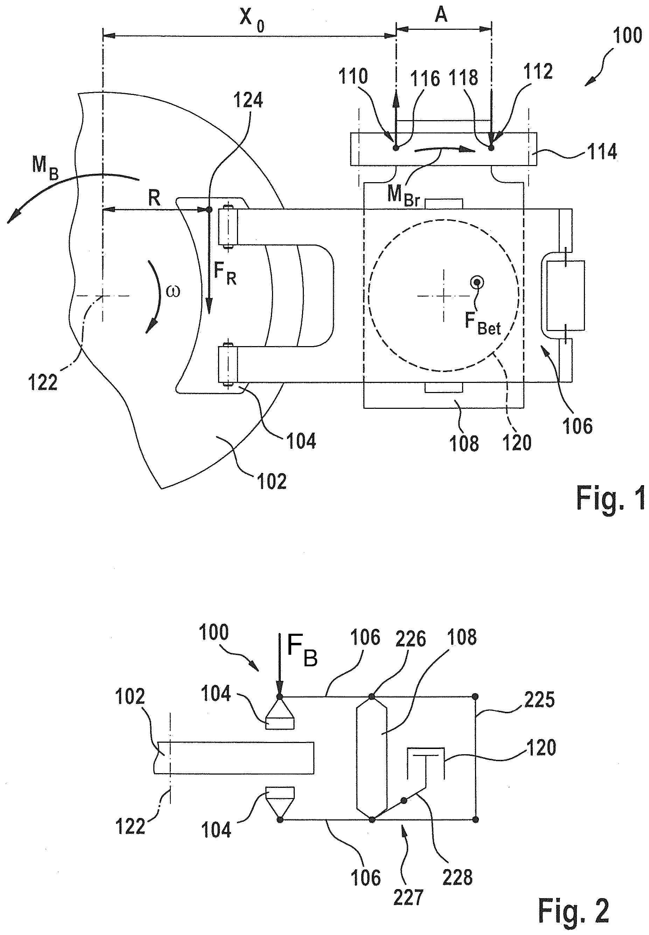

Fig. 1 zeigt eine schematische Seitenansichtsdarstellung einer Bremsanlage 100 für ein Schienenfahrzeug zur Verwendung in einem Ausführungsbeispiel der vorliegenden Erfindung. Die Bremsanlage 100 weist eine Bremsscheibe 102, einen auf die Bremsscheibe 102 wirkenden bzw. drückbaren Bremsbelag 104 sowie eine Bremszange 106 auf. Der Bremsbelag 104 ist an einem Ende der Bremszange 106 befestigt. Die Bremszange 106 ist mit einem Bremsgehäuse 108 an zwei Lagerstellen 110, 112 an einer Konsole 114 befestigt. In den zwei Lagerstellen 110, 112 sind je ein Bolzen 116, 118 zur Erfassung von Kräften auf das Lager angeordnet. In der Fig. 1 nicht direkt sichtbar und gestrichelt gezeichnet ist ein Bremszylinder 120, mittels dessen die Bremszange 106 mit dem Bremsgehäuse 108 wirkverbunden, d. h. kraftübertragend ist. Während der Fahrt eines Schienenfahrzeugs, an dem die Bremsanlage 100 befestigt ist, rotiert die Bremsscheibe 102 um eine Drehachse 122. Der Bremsbelag 104 ist seitlich zur Bremsscheibe 102 angeordnet, d. h., der Bremsbelag 104 ist in einem Toleranzbereich parallel einer Seitenfläche der Bremsscheibe 102 angeordnet. Die Fläche des Bremsbelags 104 bedeckt einem Teilbereich der Seitenfläche der Bremsscheibe 102. Die Bremszange 106 weist in dem Ausführungsbeispiel eine U-Form auf, wobei die beiden Enden mit dem Bremsbelag 104 verbunden sind und an den dem Bremsbelag 104 gegenüberliegendem Ende der Bremszylinder 120 bzw. ein nachfolgend noch näher erläuterter Druckstangensteller zur Übertragung von Kräften vom Bremszylinder 120 auf die Bremszange 106 angeordnet ist.

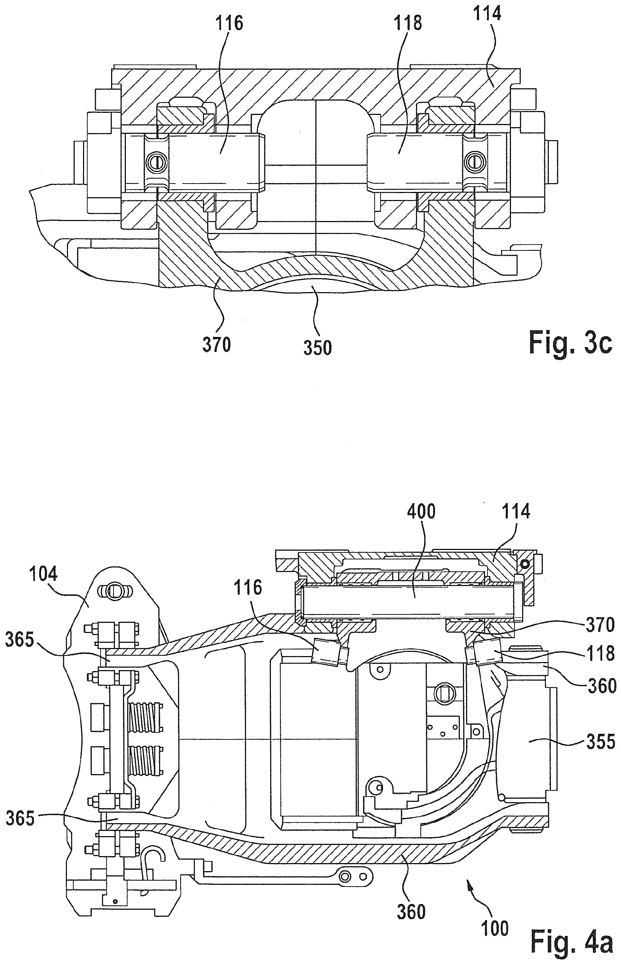

An der in der Fig. 1 dargestellten ersten Lagerstelle 110 ist das Bremsgehäuse 108 mittels eines ersten Bolzens 116 mit der Konsole 114 verbunden. Analog hierzu ist an der zweiten Lagerstelle 112 das Bremsgehäuse 108 mittels eines zweiten Bolzens 118 mit der Konsole 114 verbunden. Bei den Bolzen 116 und 118 handelt es sich jeweils um einen Messbolzen, die je ausgebildet sind, die an der jeweiligen Lagerstelle 110, 112 auftretenden Lagerkräfte zu messen und entsprechend ein erstes Messsignal respektive ein zweites Messsignal auszugeben. Ein Messbolzen 116, 118 kann auch als ein Messelement 116, 118 bezeichnet werden. In einem Ausführungsbeispiel können die zwei Bolzen 116, 118 als ein durchgehender Bolzen bzw. durchgehender Messbolzen ausgeführt sein. Ein durchgehender Bolzen wird beispielsweise in Fig. 4a dargestellt.

Ansprechend auf ein Bremssignal wird der Bremsbelag 104 gemäß der nachfolgenden detaillierteren Beschreibung durch eine Übersetzung des Bremszylinders 120 auf die Bremsscheibe 102 gedrückt. Dabei kann sich die Bremsscheibe 102 mit einer Winkelgeschwindigkeit $\omega$ drehen. Hierdurch wird an einer Wirkstelle 124 zwischen dem Bremsbelag 104 und der Bremsscheibe 102 der Bremsbelag 104 mit einer Bremskraft $F_B$ auf die Bremsscheibe 102 gedrückt. Die Wirkstelle 124 ist zur Drehachse 122 der Bremsscheibe 102 in einem Abstand R angeordnet, der dem Bremsradius R entspricht. Der Abstand $X_0$ zwischen der Drehachse 122 und der ersten Lagerstelle 110 wird dabei als Einbaumaß $X_0$ bezeichnet. Ein Abstand zwischen der ersten Lagerstelle 110 und der zweiten Lagerstelle 112 wird als Lagerabstand A bezeichnet. Durch die Drehung der Bremsscheibe 102 bei einer Drehung des Rades, an dem die Bremsscheibe 102 befestigt ist, wird an der Wirkstelle 124 eine der Bremskraft $F_B$ proportionale Reibkraft $F_R$ verursacht, die als im Wesentlichen senkrecht gegenüber einer Erstreckungsrichtung der Bremszange 106 zwischen den Bremsbelägen 104 und dem Bremszylinder 120 ausgerichtet betrachtet werden kann. Aus der Reibkraft $F_R$ bzw. der Bremskraft $F_B$ und dem Reibradius R kann ein auf die Bremsscheibe 102 wirkendes Bremsmoment $M_B$ bestimmt werden. Für eine solche Bestimmung des Bremsmomentes $M_B$ wird ausgenutzt, dass durch diese Reibkraft $F_R$ bzw. die Bremskraft $F_B$ eine Hebelwirkung der Bremszange 106 resultiert, die zu einer auf die erste Lagerstelle 110 wirkenden ersten Lagerkraft $F_1$ und einer auf die zweite Lagerstelle 112 wirkenden zweiten Lagerkraft $F_2$ führt, welche durch das Messelement 116 und 118 erfasst werden können.

Fig. 2 zeigt eine einfache schematische Darstellung einer Bremsanlage 100 für ein Schienenfahrzeug zur Verwendung in einem Ausführungsbeispiel der vorliegenden Erfindung. Bei der in Fig. 2 gezeigten Bremsanlage 100 kann es sich somit um die in Fig. 1 beschriebene Bremsanlage 100 handeln, wobei diese in Fig. 2 in einer Aufsicht schematisch dargestellt ist. Eine Bremszangeneinheit weist zwei Zangenhebel 106 auf, deren eine Enden an Bremsbacken 104 und deren andere Enden an einem sich zwischen ihnen erstreckenden Druckstangensteller 225 angelenkt sind. Die mittleren Bereiche der Zangenhebel 106 sind an ein Bremsgehäuse 108 angekoppelt, wobei die Ankoppelstelle des einen Zangenhebels 106 als einfaches Drehlager 226 ausgebildet ist. Die Ankoppelstelle des anderen Zangenhebels 106 ist als Exzentergetriebe 227 ausgeführt, das von einem im Gehäuse gehaltenen Bremszylinder 120 über einen Kurbelarm 228 in Annäherungsrichtung der beiden Zangenhebel 106 betätigbar ist. Das Exzentergetriebe 227 weist eine im Gehäuse um eine Achse drehbare Welle auf, welche mit einer Exzentrizität, die der Bremsscheibe 102 abgewandt schräg nach hinten-außen gerichtet Ist, einen Zapfen mit der Achse trägt, an welchem der Zangenhebel 106 gelagert ist. Das Exzentergetriebe 227 ermöglicht bei relativ kurzen Zangenhebeln 106 ein hohes Kraftübersetzungsverhältnis.

In einem Ausführungsbeispiel kann der Bremszylinder 120 oder alternativ das Gehäuse des Bremszylinders 120 mit dem Bremsgehäuse 108 verbunden sein.

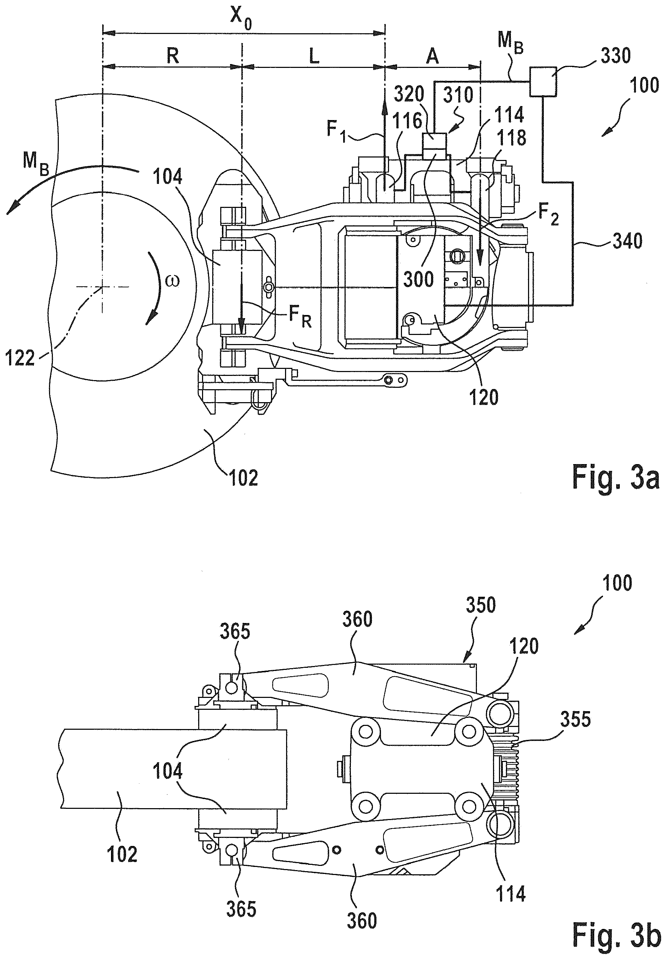

Die folgenden Figuren Fig. 3a, 3b und 3c zeigen unterschiedliche Ansichten eines Ausführungsbeispiels für eine Bremsanlage 100 für ein Schienenfahrzeug. Hierbei ist die Bremsanlage 100, die in Fig. 3a in einer Seitenansicht mit Angabe der Abstandbezeichnungen zwischen einzelnen Elementen dargestellt ist, in Fig. 3b in einer Aufsicht wiedergegeben. Fig. 3c zeigt eine Schnittansicht eines Teilbereichs der Bremsanlage 100, aus der die Positionen der Lagerstellen mit dem ersten Messbolzen und dem zweiten Messbolzen deutlich werden.

Fig. 3a zeigt eine Darstellung einer Bremsanlage 100 für ein Schienenfahrzeug zur Verwendung in einem Ausführungsbeispiel der vorliegenden Erfindung. Hierbei sind nochmals die bereits mit Bezug zur Fig. 1 näher erläuterten Elemente und Komponenten wiedergegeben, wobei nun zur besseren Erläuterung der Bestimmung des Bremsmomentes $M_B$ auch die Abstände bzw. die Bezeichnungen der Abstände einiger der Elemente der Bremsanlage 100 eingetragen sind. Dabei kann das erste Messsignal, welches vom ersten Messbolzen 116 bereitgestellt wird, und das zweite Messsignal, welches vom zweiten Messbolzen 118 bereitgestellt wird, mittels einer Schnittstelle 300 zum Einlesen einer in der Fig. 3a dargestellten Vorrichtung 310 eingelesen werden. Das erste und zweite Messsignal können dann von der Schnittstelle 300 in eine Einrichtung 320 zum Ermitteln des Bremsmomentes $M_B$ übertragen werden, in welcher beispielsweise entsprechend der nachfolgend noch näher beschriebenen Vorgehensweise das Bremsmoment $M_B$ bestimmt wird. Das ermittelte Bremsmoment $M_B$ wird hieran anschließend beispielsweise an eine Vorrichtung 330 zum Ausgeben eines Bremssignals 340 übertragen, die eine Verlängerung oder Verkürzung des Bremszylinders ansteuert, um das (aktuell auf die Bremsscheibe 102 wirkende) Bremsmoment $M_B$ derart zu verändern, dass es beispielsweise einem gewünschten Sollbremsmoment entspricht. Hierdurch kann auf technisch sehr einfache Art eine Regelung der von den Bremsbelägen 104 auf die Bremsscheibe 102 aufgebrachten Bremskraft $F_B$ implementiert werden. Die Vorrichtung 310 zum Bestimmen des Bremsmomentes $M_B$ und die Vorrichtung 330 zum Ausgeben des Bremssignals 340 sind in der Fig. 3a nur beispielhaft dargestellt bzw. angeordnet. Diese Vorrichtungen 310 und 330 müssten daher nicht tatsächlich an den in der Fig. 3a dargestellten Positionen verbaut sein, sondern können an einer beliebigen Stelle in der Bremsanlage 100 oder allgemein im Schienenfahrzeug verbaut sein.

Fig. 3b zeigt eine Aufsichtdarstellung der in Fig. 3a dargestellten Bremsanlage 100. In der Darstellung aus Fig. 3b ist insbesondere ein Krafterzeuger 350 des Bremszylinders 120 zu erkennen, der eine Betätigungskraft erzeugt, welche mittels einer Hebelübersetzung auf einen der Zangenhebel 360 an einen Bremsbelag 104 geleitet wird. An dem Zangenhebel 360 wird diese Kraft über den Druckstangensteller 355 an den zweiten Zangenhebel 360 geleitet, der den zweiten Bremsbelag 104 in Kontakt mit der Bremsscheibe bringt. Somit wird nun die Betätigungskraft $F_{Bet}$ in die Bremskraft $F_B$ umgesetzt, indem die an den Belaghaltern angebrachten Bremsbeläge 104 an die Bremsscheibe 102 gedrückt werden.

Fig. 3c zeigt eine Schnittansicht eines Teilbereichs der Bremsanlage 100. In der Fig. 3c ist die Lage des ersten Messbolzens 116 und des zweiten Messbolzens 118 zu erkennen, die an dem Befestigungspunkt in der ersten Lagerstelle 110 bzw. zweiten 112 Lagerstelle des Bremsgehäuses 370 an der Konsole 114 angeordnet sind. Im unteren Teilbereich der Schnittdarstellung aus der Fig. 3c ist das Gehäuse, in das der Krafterzeuger 350 des Bremszylinders 120 integriert ist, dargestellt.

Fig. 4a zeigt eine Schnittdarstellung durch einen Teil der Bremsanlage 100 gemäß einem weiteren Ausführungsbeispiel der vorliegenden Erfindung. Hierbei ist zu erkennen, dass eine Verbindung zwischen der Konsole 114 und der Bremszange 106 durch einen Aufhängebolzen 400 realisiert ist, wobei der Aufhängebolzen 400 durch eine Bohrung des Gehäuses 370 des Krafterzeugers 350 geführt ist. Das erste Messelement 116 und das zweite Messelement 118 sind je zwischen das Gehäuse 370 des Krafterzeugers 350 und einer Aufhängung 400 verbaut, sodass sie eine vom jeweils angrenzenden Zangenhebel 360 durch das Gehäuse 370 geleitete Verformung messen können. Die Verformung ist proportional zur - aufgebrachten - Kraft.

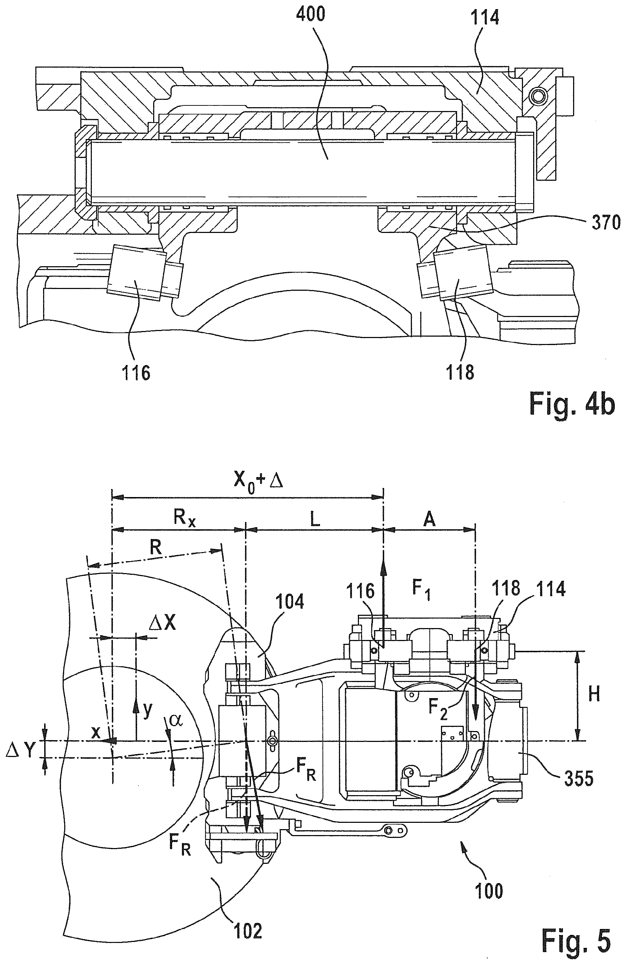

Fig. 4b zeigt den besonders relevanten Bereich aus Fig.4a in vergrößerter Darstellung.

Zur Ermittlung des Bremsmoments, das während einer Bremsung auf eine Bremsscheibe 102 wirkt, können somit in der Bremsanlage 100 bzw. an den Aufhängungspunkten zwischen je einem Zangenhebel 360 und einem Gehäuse 370 des Krafterzeugers 350 zwei Sensoren 116 bzw. 118 in einem vorbekannten Abstand A platziert werden. Die Sensoren 116 bzw. 118 können so angeordnet oder hieran positioniert werden, dass zum einen die Reibkraft $F_R$ zwischen Bremsbelag und Bremsscheibe und zum anderen ein durch die Reibkraft in die Bremszange eingeleitetes Biegemoment ermittelt werden kann. Mittels dieser beiden Messwerte und den bekannten Abmessungen der Bremszange und des Drehgestelles, beziehungsweise der Konsole, kann in einem Steuer- bzw. Ermittlungsmodul 310 somit der momentan vorhandene Reibradius R und zusammen mit der ermittelten Reibkraft $F_R$ das aktuell wirkende Bremsmoment $M_B$ errechnet werden. Die in dem Steuer- bzw. Ermittlungsmodul 310 bestimmten Größen oder Werte können einem Regelmodul 330 zur Ansteuerung der Bremsanlage bzw. zur Ausgabe eines Bremssignals zur Regelung der Betätigungskraft $F_{Bet}$ bereitgestellt werden. Zusätzlich oder gleichzeitig können die bestimmten Größen oder Werte auf einer Anzeige angezeigt werden, insbesondere für eine Person in dem Schienenfahrzeug. Die angezeigten Größen oder Werte können eine Person bei der Steuerung des Schienenfahrzeugs unterstützen.

Im Bereich der Aufhängung bzw. der Aufhängebolzen 400 ist das Gehäuse 370 des Krafterzeugers 350 (Kompaktzangen) nur durch das Eigengewicht der Bremszange 106 und durch die Auswirkung der Reibkraft $F_R$ an den Belägen 104 belastet. Wird in diesem Bereich an zwei Stellen der Spannungs- oder Verformungszustand gemessen, so lässt sich die durch die Bremszange 106 geleitete Belastung eindeutig ermitteln. Bei entsprechender Kalibrierung der Sensorik können die Reibkraft $F_R$ und der wirksame Hebelarm L aus der Messung bestimmt werden und der für das Bremsmoment $M_B$ relevante Reibradius R errechnet werden.

Die Bremszangeneinheit bzw. die Bremsanlage 100 wird also mittels der beiden Kraftmessbolzen 116 und 118 in der Konsole 114 schwenkbar gelagert. Die Konsole 114 wird fest mit dem Drehgestellrahmen des (Schienen-) Fahrzeuges verschraubt. Die Bremszange 106 ist mit dem Gehäuse 108 in der Konsole 114 in zwei Lagerstellen aufgehängt. Die Lagerbolzen 116 bzw. 118 sind als separate Kraftmessbolzen ausgeführt. Bei einer Bremsung können die beiden auftretenden Lagerkräfte $F_1$ und $F_2$ sehr genau gemessen werden. Damit lässt sich das auf die Bremsscheibe 102 wirkende Bremsmoment $M_B$ gemäß dem folgenden Zusammenhang bestimmen:

$$M_B = F_R * R \text{ oder}$$
$$M_B = F_R * X_0 - F_2 * A$$

Fig. 5 zeigt eine Darstellung einer Bremsanlage 100 mit potenzieller Achsbewegung der Bremsscheibe 102 in Bezug zur Konsole 114 für ein Schienenfahrzeug zur Verwendung in einem Ausführungsbeispiel der vorliegenden Erfindung. Bei der Bremsanlage 100 kann es sich um eine in Fig. 3a bereits dargestellte Bremsanlage 100 handeln. Dabei ist die Drehachse 122 in Fig. 5 im Vergleich zu der in Fig. 3a dargestellten Drehachse 122 verschoben. Durch die Verschiebung der Drehachse 122 in Bezug auf die Konsole 114 ergeben sich neue geometrische Zusammenhänge, die auch eine Auswirkung auf die in der Bremsanlage 100 wirkenden Kräfte haben.

Weiterhin besteht mit dem hier vorgestellten Ansatz eine Möglichkeit, eine Achsverschiebung während der Bremsung bei der Bestimmung des Bremsmomentes zusätzlich zu berücksichtigen. Hierzu ist in Fig. 5 eine Verschiebung der Radachse und somit des Mittel- bzw. Drehpunkts der Bremsscheibe 102 der in vertikaler Richtung $\Delta Y$ und in Längsrichtung des Fahrzeugs $\Delta X$ dargestellt. Sind die Verschiebungen bzw. die Verschiebungsstrecken $\Delta X$ und $\Delta Y$ bekannt, so kann aus der bekannten Geometrie und den gemessenen Kräften in den Lagerstellen das Bremsmoment $M_B$ errechnet werden. Wird der in Fig. 5 angegebene Winkel $\alpha$ unter Verwendung eines Wertes für $R_x$ (d. h. den Anteil der Radiuskomponente in x-Richtung, d. h. in Richtung parallel zu einem Schienenverlauf) in mittiger Lage näherungsweise berechnet, so lässt sich das Bremsmoment mit einem relativ kleinen Fehler über einfache (geometrische) Gleichungen ermitteln.

Wird versucht, mit einem von dem Kraftangriff, d. h. der Reibstelle 124 zwischen dem Bremsbelag 104 und der Bremsscheibe 102, entfernt angebrachten Sensor 116 bzw. 118 ein exaktes Bremsmoment zu ermitteln, zeigt sich, dass Schwankungen dieser Reibstelle 124 (realiter handelt es sich um eine flächige Erstreckung), also letztlich des Reibradius', nicht ausreichend genau auflösbar sind. Liegt nur ein Kraftwert, z. B. $F_1$ oder $F_2$ vor, lässt sich numerisch kein genauer Wert für das Bremsmoment $M_B$ herausrechnen - es bleibt eine Unbekannte. Durch die gleichzeitige messtechnische Erfassung beider Kräfte $F_1$ und $F_2$ und ihrem exakt bekannten geometrischen Ort ist das Gleichungssystem für die Kräfte und Momente voll bestimmt. Der Vorteil des hier vorgeschlagenen Ansatzes besteht insbesondere also in der Verwendung von zwei voneinander beabstandeten Verformungs- bzw. Kraft-Sensoren 116 bzw. 118, die an kraftführenden Elementen der Bremse wie dem Gehäuse 370 kraftübertragend angebracht sind (d. h. wirkverbunden sind).

Als weiterer Vorteil des hier vorgeschlagenen Ansatzes lässt sich anführen, dass einer der Sensoren 116 bzw. 118 bei entsprechender Anbringung auch dazu verwendet werden kann, eine Verformungskraft zu erfassen, die nicht aus der unmittelbarer bremsenbezogenen Reibkraft $F_R$ herrührt. Er kann also bei nicht drehender Bremsscheibe bzw. nicht drehendem Radsatz (d. h. bei Stillstand des Fahrzeugs) die Betätigungskraft (im Sinne einer Analyse der korrekten Funktion) messen. Die Messbolzen 116 und 118 können dabei entsprechend der in Fig. 3a oder Fig. 4a dargestellten Positionierung angeordnet sein, wobei in diesen Figuren die prinzipielle Thematik und beispielhaft die Lokalisierung der Sensoren an der Scheibenbremse eines Schienenfahrzeugs auch zur Verwendung für die Messung der Verformung von zumindest einer Komponente der Bremsanlage 100 gezeigt ist. Die Verformungsmessung im Kraftfluss einer durch eine Bremskraft $F_B$ beaufschlagten Bremsenbaugruppe ergibt in rechnerischer Ableitung der gemessenen Reaktionskräfte $F_1$ und $F_2$ die exakte, am Entstehungsort wirkende Reibkraft $F_R$. Dabei können die Sensoren 116 bzw. 118 an der Konsole 114, dem Aufhängebolzen 400 und/oder dem Bremsgehäuse 370 angebracht oder eingebracht sein, wie es aus den Figuren 4a und 4b ersichtlich ist.

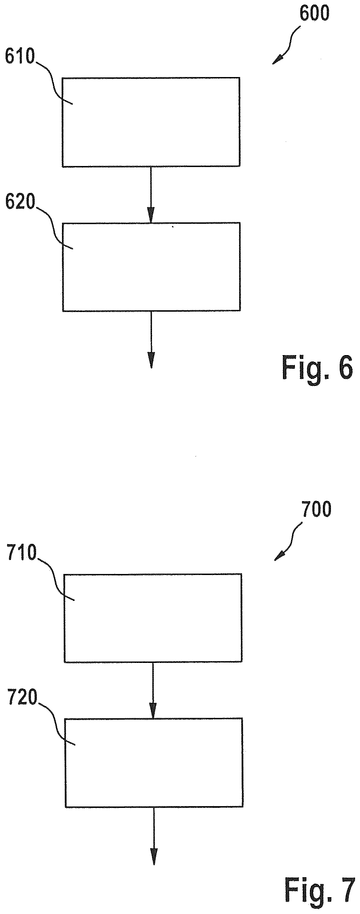

Fig. 6 zeigt ein Ablaufdiagramm eines Verfahrens 600 zum Bestimmen eines Bremsmoments an einer Bremsanlage für ein Schienenfahrzeug. Dabei umfasst die Bremsanlage zumindest eine einem Rad oder zumindest einem Radsatz zugeordnete Bremsanlage zum Erzeugen einer Bremskraft auf ein Bremssignal hin, zumindest eine Bremsscheibe, zumindest einen mit der Bremsscheibe zusammenwirkenden Bremsbelag sowie eine mit dem Bremsbelag verbundene Bremszange. Die Bremszange ist an zumindest einer ersten Lagerstelle und einer zweiten Lagerstelle gelagert, wobei die zweite Lagerstelle in einem vordefinierten Lagerabstand von der ersten Lagerstelle beabstandet ist, wobei an der Bremszange ein erster Sensor zum Bereitstellen eines ersten Messsignals und ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren. Das Verfahren 600 umfasst einen Schritt 610 des Einlesens des ersten Messsignals und des zweiten Messsignals. Weiterhin umfasst das Verfahren 600 einen Schritt 620 des Ermittelns eines Bremsmoments unter Verwendung eines Einbaumaßes, des Lagerabstands sowie des ersten Messsignals und des zweiten Messsignals, wobei das Einbaumaß dem Abstand zwischen einer Drehachse der Bremsscheibe und der ersten Lagerstelle entspricht.

Fig. 7 zeigt ein Ablaufdiagramm eines Verfahrens 700 zum Ausgeben eines Bremssignals für eine Bremskraft an einer Bremsanlage für ein Schienenfahrzeug zur Verwendung in einem Ausführungsbeispiel der vorliegenden Erfindung. Dabei umfasst die Bremsanlage zumindest eine einem Rad oder zumindest einem Radsatz zugeordnete Bremsanlage zum Erzeugen einer Bremskraft auf ein Bremssignal hin, zumindest eine Bremsscheibe, zumindest einen mit der Bremsscheibe zusammenwirkenden Bremsbelag sowie eine mit dem Bremsbelag verbundene Bremszange. Die Bremszange ist an zumindest einer ersten Lagerstelle und einer zweiten Lagerstelle gelagert, wobei die zweite Lagerstelle in einem vordefinierten Lagerabstand von der ersten Lagerstelle beabstandet ist, wobei an der Bremszange ein erster Sensor zum Bereitstellen eines ersten Messsignals und ein zweiter Sensor zum Bereitstellen eines zweiten Messsignals angeordnet sind, wobei das erste Messsignal und das zweite Messsignal je eine Kraft, insbesondere eine Lagerkraft, oder eine davon abgeleitete Größe repräsentieren. Das Verfahren 700 umfasst einen Schritt des Einlesens 710 eines Bremsmoments, welches durch Ausführung einer Variante eines Verfahrens zur Bestimmung eines Bremsmomentes bestimmt wurde. Weiterhin umfasst das Verfahren 700 einen Schritt des Bestimmens 720 einer Bremskraft unter Verwendung eines vorbestimmten Sollbremsmoments und dem eingelesenen Bremsmoment, um ein Bremssignal auszugeben.

Die beschriebenen Ausführungsbeispiele sind nur beispielhaft gewählt und können miteinander kombiniert werden.

Bezugszeichenliste

| | |
|---|---|
| 100 | Bremsanlage |
| 102 | Bremsscheibe |
| 104 | Bremsbelag |
| 106 | Bremszange |
| 108 | Bremsgehäuse |
| 110 | erste Lagerstelle |
| 112 | zweite Lagerstelle |
| 114 | Konsole |
| 116 | erster Bolzen, erstes Messelement |
| 118 | zweiter Bolzen, zweites Messelement |
| 120 | Bremszylinder |
| 122 | Drehachse |
| 124 | Wirkstelle |
| R | Reibradius |
| A | Lagerabstand |
| $X_0$ | Einbaumaß |
| $F_R$ | Reibkraft |
| $F_1$ | Erste Lagerkraft |
| $F_2$ | zweite Lagerkraft |
| $M_B$ | Bremsmoment |

| | |
|---|---|
| $F_{Bet}$ | Betätigungskraft |
| $F_B$ | Bremskraft |
| 225 | Druckstangensteller |
| 226 | Drehlager |
| 227 | Exzentergetriebe |
| 228 | Kurbelarm |
| 300 | Schnittstelle zum Einlesen von einem ersten und einem zweiten Messsignal |
| 310 | Vorrichtung zum Bestimmen |
| 320 | Einrichtung zum Ermitteln |
| 330 | Vorrichtung zum Ausgeben eines Bremssignals |
| 340 | Bremssignal |
| 350 | Krafterzeuger |
| 355 | Druckstangensteller |
| 360 | Zangenhebel |
| 365 | Befestigungseinheit zur Halterung des Bremsbelags |
| 370 | Gehäuse des Krafterzeugers |
| 400 | Aufhängebolzen |
| 600 | Verfahren zum Bestimmung eines Bremsmomentes |
| 610 | Schritt des Einlesens |
| 620 | Schritt des Ermittelns |
| 700 | Verfahren zur Ausgabe eines Bremssignals |
| 710 | Schritt des Einlesens |
| 720 | Schritt des Bestimmens |

**Patentansprüche**

1. Verfahren (600) zum Bestimmen eines Bremsmoments ($M_B$) an einer Bremsanlage (100) für ein Schienenfahrzeug, wobei die zumindest einem Rad oder zumindest einem Radsatz zugeordnete Bremsanlage (100) zum Erzeugen einer Bremskraft ($F_B$) auf ein Bremssignal (340) hin zumindest eine Bremsscheibe (102), zumindest einen mit der Bremsscheibe (102) zusammenwirkenden Bremsbelag (104) sowie eine mit dem Bremsbelag (104) verbundene Bremszange (106) sowie ein Bremsgehäuse (108) umfasst, wobei die Bremszange (106) mit einem Bremsgehäuse an zumindest einer ersten Lagerstelle (110) und einer zweiten Lagerstelle (112) gelagert ist, wobei die zweite Lagerstelle (112) in einem vordefinierten Lagerabstand (A) von der ersten Lagerstelle (110) beabstandet ist, wobei an der Bremsanlage (100) ein erster Sensor (116) zum Bereitstellen eines ersten Messsignals und zumindest ein zweiter Sensor (118) zum Bereitstellen eines zweiten Messsignals angeordnet sind, wobei das erste Messsignal und das zweite Messsignal je eine Kraft ($F_1$, $F_2$), insbesondere eine Lagerkraft, oder eine davon abgeleitete Größe repräsentieren, wobei das Verfahren (600) die folgenden Schritte aufweist:

    Einlesen (610) des ersten Messsignals und des zweiten Messsignals; und
    Ermitteln (620) eines Bremsmoments ($M_B$) unter Verwendung eines Einbaumaßes ($X_0$), des Lagerabstands (A) sowie des ersten Messsignals und des zweiten Messsignals, wobei das Einbaumaß ($X_0$) dem Abstand zwischen einer Drehachse (122) der Bremsscheibe (102) und der ersten Lagerstelle (110) entspricht.

2. Verfahren (600) gemäß Anspruch 1, bei dem im Schritt des Einlesens (610) ein erstes Messsignal eingelesen wird das eine der ersten Lagerstelle (110) zugeordnete erste Lagerkraft ($F_1$) repräsentiert und bei dem ein zweites Messsignal eingelesen wird, das eine der zweiten Lagerstelle (110) zugeordnete zweite Lagerkraft ($F_2$) repräsentiert.

3. Verfahren (600) gemäß einem der vorangegangenen Ansprüche, bei dem im Schritt des Ermittelns (620) eine Reibkraft ($F_R$) unter Verwendung des ersten Messsignals und des zweiten Messsignals ermittelt wird.

4. Verfahren (600) gemäß einem der vorangegangenen Ansprüche, bei dem im Schritt des Einlesens (610) ein erstes und zweites Messsignal eingelesen werden, wobei das erste Messsignal und das zweite Messsignal je eine Verformung in der Bremsanlage (100) repräsentieren.

5. Verfahren (600) gemäß Anspruch 4, bei dem im Schritt des Ermitteins (620) eine Anpresskraft des Bremsbelags (104) auf die Bremsscheibe (102) unter Verwendung des ersten Messsignals und des zweiten Messsignals ermittelt wird, insbesondere wenn sich die Bremsscheibe (102) nicht in Rotation befindet, und im Stillstand keine Reibkraft ($F_R$) übertragen wird.

6. Verfahren (600) gemäß einem der vorangegangenen Ansprüche, bei dem im Schritt des Ermitteins ein Reibradius (R) unter Verwendung des Einbaumaßes ($X_0$), des Lagerabstands (A) sowie des ersten Messsignals und des zweiten Messsignals ermittelt wird, insbesondere wobei der Reibradius (R) einen Abstand zwischen einer Drehachse (122) des Rades und einem resultierenden Angriffspunkt (124) des Bremsbelags (104) auf der Bremsscheibe (102) repräsentiert.

7. Verfahren (600) gemäß einem der vorangegangenen Ansprüche, bei dem im Schritt des Einlesens (610) eine Information über eine Längenänderung ($X_0+\Delta X$) des Einbaumaßes ($X_0$) und/oder eine Information über eine Änderung ($\Delta Y$) einer Position einer Achse (122) des Rades in einem Toleranzbereich senkrecht zur Erstreckungsrichtung des Einbaumaßes ($X_0$) eingelesen wird und bei dem im Schritt des Ermittelns (620) das Bremsmoment ($M_B$) und/oder die Reibkraft ($F_R$) und/oder der Reibradius (R) unter Verwendung der Information über eine Längenänderung ($X_0 + \Delta X$) und/oder der Information über eine Änderung ($\Delta Y$) einer Position ermittelt wird.

8. Verfahren (700) zum Ausgeben eines Bremssignals (340) für eine Bremskraft ($F_B$) an einer Bremsanlage (100) für ein Schienenfahrzeug, wobei die zumindest einem Rad oder zumindest einem Radsatz zugeordnete Bremsanlage (100) zum Erzeugen einer Bremskraft ($F_B$) auf ein Bremssignal (340) hin zumindest eine Bremsscheibe (102), zumindest einen mit der Bremsscheibe (102) zusammenwirkenden Bremsbelag (104) sowie eine mit dem Bremsbelag (104) verbundene Bremszange (106) umfasst, wobei die Bremszange (106) mit einem Bremsgehäuse (108) an zumindest einer ersten Lagerstelle (110) und einer zweiten Lagerstelle (112) gelagert ist, wobei die zweite Lagerstelle (112) in einem vordefinierten Lagerabstand von der ersten Lagerstelle (110) beabstandet ist, wobei an der Bremszange (106) ein erster Sensor (116) zum Bereitstellen eines ersten Messsignals und ein zweiter Sensor (118) zum Bereitstellen eines zweiten Messsignals angeordnet sind, wobei das erste Messsignal und das zweite Messsignal je eine Kraft ($F_1$. $F_2$), insbesondere eine Lagerkraft, oder eine davon abgeleitete Größe repräsentieren, wobei das Verfahren (700) die folgenden Schritte aufweist:

Einlesen (710) eines Bremsmoments ($M_B$), welches durch Ausführung der Schritte eines Verfahrens (600) gemäß einem der vorangegangenen Ansprüche bestimmt wurde, und Bestimmen (720) einer Bremskraft ($F_B$) unter Verwendung eines vorbestimmten Sollbremsmoments und dem eingelesenen Bremsmoment ($M_B$), um ein Bremssignal (340) auszugeben.

9. Verfahren (700) gemäß Anspruch 8, bei dem im Schritt des Bestimmens die Bremskraft ($F_B$) unter Verwendung einer Reibkraft ($F_R$) bestimmt wird.

10. Verfahren (700) gemäß einem der Ansprüche 8 bis 9, bei dem im Schritt des Bestimmens (720) die Bremskraft ($F_B$) unter Verwendung eines Reibradius (R) bestimmt wird.

11. Vorrichtung (310) zum Bestimmen eines Bremsmoments ($M_B$) an einer Bremsanlage (100) für ein Schienenfahrzeug, wobei die zumindest einem Rad oder zumindest einem Radsatz zugeordnete Bremsanlage (100) zum Erzeugen einer Bremskraft ($F_B$) auf ein Bremssignal (340) hin zumindest eine Bremsscheibe, zumindest einen mit der Bremsscheibe (102) zusammenwirkenden Bremsbelag (104) sowie eine mit dem Bremsbelag (104) verbundene Bremszange (106) umfasst, wobei die Bremszange (106) über ein Bremsgehäuse (108) an zumindest einer ersten Lagerstelle (110) und einer zweiten Lagerstelle (112) gelagert ist, wobei die zweite Lagerstelle (112) in einem vordefinierten Lagerabstand von der ersten Lagerstelle (110) beabstandet ist, wobei an dem Bremsgehäuse (108) oder zwischen diesem und einer Konsole (114) ein erster Sensor (116) zum Bereitstellen eines ersten Messsignals und ein zweiter Sensor (118) zum Bereitstellen eines zweiten Messsignals angeordnet sind, wobei das erste Messsignal und das zweite Messsignal je eine Kraft ($F_1$, $F_2$), insbesondere eine Lagerkraft, oder eine davon abgeleitete Größe repräsentieren, wobei die Vorrichtung (310) die folgenden Merkmale aufweist:

eine Schnittstelle (300) zum Einlesen des ersten Messsignals und des zweiten Messsignals; und eine Einrichtung (320) zum Ermitteln eines Bremsmoments unter Verwendung eines Einbaumaßes ($X_0$), des Lagerabstands (A) sowie des ersten Messsignals und des zweiten Messsignals, wobei das Einbaumaß ($X_0$) dem Abstand zwischen einer Drehachse (122) der Bremsscheibe (102) und der ersten Lagerstelle (110) entspricht.

12. Vorrichtung (330) zum Ausgeben eines Bremssignals (340) für eine Bremskraft ($F_B$) an einer Bremsanlage (100) für ein Schienenfahrzeug, wobei die zumindest einem Rad oder zumindest einem Radsatz zugeordnete Bremsanlage (100) zum Erzeugen einer Bremskraft ($F_B$) auf ein Bremssignal (340) hin zumindest eine Bremsscheibe, zumindest einen mit der Bremsscheibe (102) zusammenwirkenden Bremsbelag (104) sowie eine mit dem Bremsbelag (104) verbundene Bremszange (106) umfasst, wobei die Bremszange (106) über ein Bremsgehäuse (108) an zumindest einer ersten Lagerstelle (110) und einer zweiten Lagerstelle (112) gelagert ist, wobei die zweite Lagerstelle (112) in einem vordefinierten Lagerabstand (A) von der ersten Lagerstelle (110) beabstandet ist, wobei an der Bremszange (106) ein erster Sensor (116) zum Bereitstellen eines ersten Messsignals und ein zweiter Sensor (118) zum Bereitstellen eines zweiten Messsignals angeordnet sind, wobei das erste Messsignal und das zweite Messsignal je eine Kraft ($F_1$, $F_2$), insbesondere eine Lagerkraft, oder eine davon abgeleitete Größe repräsentieren, wobei die Vorrichtung (330) die folgenden Merkmale aufweist:

eine Schnittstelle zum Einlesen eines von einer Vorrichtung gemäß Anspruch 11 bestimmten Bremsmoments ($M_B$); und eine Einrichtung zum Bestimmen einer Bremskraft ($F_B$) unter Verwendung eines vorbestimmten Sollbremsmoments und dem eingelesenen Bremsmoment ($M_B$), um ein Bremssignal (340) anzusteuern.

13. Computerprogramm mit Programmcode zur Durchführung eines Verfahrens (600, 700) gemäß einem der Ansprüche 1 bis 10, wenn das Computerprogramm auf einer Vorrichtung (310, 330) ausgeführt wird.

**Claims**

1. Method (600) for determining a braking torque ($M_B$) on a braking system (100) for a railway vehicle, wherein the braking system (100), which is assigned to at least one wheel or at least one wheel set, for generating a braking force ($F_B$) following a braking signal (340) comprises at least one brake disc (102), at least one brake pad (104) cooperating with the brake disc (102), a brake calliper (106) connected to the brake pad (104), and a brake housing (108), wherein the brake calliper (106) is mounted with a brake housing on at least one first bearing point (110) and one second bearing point (112), the second bearing point (112) being spaced apart from the first bearing point (110) at a predefined bearing distance (A), a first sensor (116) for providing a first measurement signal and at least one second sensor (118) for providing a second measurement signal being arranged on the braking system (100), wherein the first measurement signal and the second measurement signal each represent a force ($F_1$, $F_2$), in particular a bearing force, or a value derived therefrom, wherein the method (600) has the following steps:

   reading (610) the first measurement signal and the second measurement signal; and
   determining (620) a braking torque ($M_B$) using an assembly dimension ($X_0$), the bearing distance (A) and the first measurement signal and the second measurement signal, the assembly dimension ($X_0$) corresponding to the distance between an axis of rotation (122) of the brake disc (102) and the first bearing point (110).

2. Method (600) according to claim 1, wherein in the reading step (610) a first measurement signal is read, which represents a first bearing force ($F_1$) assigned to the first bearing point (110), and wherein a second measurement signal is read, which represents a second bearing force ($F_2$) assigned to the second bearing point (110).

3. Method (600) according to one of the preceding claims, wherein in the determining step (620) a friction force ($F_R$) is determined using the first measurement signal and the second measurement signal.

4. Method (600) according to one of the preceding claims, wherein in the reading step (610) a first and a second measurement signal are read, the first measurement signal and the second measurement signal each representing a deformation in the braking system (100).

5. Method (600) according to claim 4, wherein in the determining step (620) a clamping force of the brake pad (104) on the brake disc (102) is determined using the first measurement signal and the second measurement signal, in particular if the brake disc (102) is not in rotation and no friction force ($F_R$) is transmitted when at a standstill.

6. Method (600) according to one of the preceding claims, wherein in the determining step a friction radius (R) is determined using the assembly dimension ($X_0$), the bearing distance (A) and the first measurement signal and the second measurement signal, in particular wherein the friction radius (R) represents a distance between an axis of rotation (122) of the wheel and a resulting engagement point (124) of the brake pad (104) on the brake disc (102).

7. Method (600) according to one of the preceding claims, wherein in the reading step (610) information on a change in length ($X_0+\Delta X$) of the assembly dimension ($X_0$) and / or information on a change ($\Delta Y$) in a position of one axis (122) of the wheel within a tolerance range perpendicular to the direction of extension of the assembly dimension ($X_0$) is read, and in the determining step (620) the braking torque ($M_B$) and / or the friction force ($F_R$) and / or the friction radius (R) is / are determined using the information on a change in length ($X0+\Delta X$) and /or the information on a change ($\Delta Y$) in a position.

8. Method (700) for outputting a braking signal (340) for a braking force ($F_B$) on a braking system (100) for a railway vehicle, wherein the braking system (100), which is assigned to at least one wheel or at least one wheel set, for generating a braking force ($F_B$) following a braking signal (340) has at least one brake disc (102), at least one brake pad (104) cooperating with the brake disc (102), and a brake calliper (106) connected to the brake pad (104), wherein the brake calliper (106) is mounted with a brake housing (108) on at least one first bearing point (110) and one second bearing point (112), the second bearing point (112) being spaced apart from the first bearing point (110) at a predefined bearing distance, a first sensor (116) for providing a first measurement signal and a second sensor (118) for providing a second measurement signal being arranged on the brake calliper (106), the first measurement signal and the second measurement signal each representing a force ($F_1$. $F_2$), in particular a bearing force, or a value derived therefrom, wherein the method (700) has the following steps:

reading (710) a braking torque ($M_B$) which has been determined by carrying out the steps of a method (600) according to one of the preceding claims, and

determining (720) a braking force ($F_B$) using a predetermined nominal braking torque and the read braking torque ($M_B$), in order to output a braking signal (340).

9. Method (700) according to claim 8, wherein in the determining step (720) the braking force ($F_B$) is determined using a friction force ($F_R$).

10. Method (700) according to one of claims 8 to 9, wherein in the determining step (720) the braking force ($F_B$) is determined using a friction radius (R).

11. Apparatus (310) for determining a braking torque ($M_B$) on a braking system (100) for a railway vehicle, wherein the braking system (100), which is assigned to at least one wheel or at least one wheel set, for generating a braking force ($F_B$) following a braking signal (340) comprises at least one brake disc, at least one brake pad (104) cooperating with the brake disc (102), and a brake calliper (106) connected to the brake pad (104), wherein the brake calliper (106) is mounted via a brake housing (108) on at least one first bearing point (110) and one second bearing point (112), the second bearing point (112) being spaced apart from the first bearing point (110) at a predefined bearing distance, a first sensor (116) for providing a first measurement signal and a second sensor (118) for providing a second measurement signal being arranged on the brake housing (108) or between said brake housing (108) and a bracket (114), the first measurement signal and the second measurement signal each representing a force ($F_1$, $F_2$), in particular a bearing force, or a value derived therefrom, wherein the apparatus (310) has the following features:

an interface (300) for reading the first measurement signal and the second measurement signal; and

a means (320) for determining a braking torque using an assembly dimension ($X_0$), the bearing distance (A), the first measurement signal and the second measurement signal, the assembly dimension ($X_0$) corresponding to the distance between an axis of rotation (122) of the brake disc (102) and the first bearing point (110).

12. Apparatus (330) for outputting a braking signal (340) for a braking force ($F_B$) on a braking system (100) for a railway vehicle, wherein the braking system (100), which is assigned to at least one wheel or at least one wheel set, for generating a braking force ($F_B$) following a braking signal (340) comprises at least one brake disc, at least one brake pad (104) cooperating with the brake disc (102), and a brake calliper (106) connected to the brake pad (104), wherein the brake calliper (106) is mounted via a brake housing (108) on at least one first bearing point (110) and one second bearing point (112), the second bearing point (112) being spaced apart from the first bearing point (110) at a predefined bearing distance (A), a first sensor (116) for providing a first measurement signal and a second sensor (118) for providing a second measurement signal being arranged on the brake calliper (106), the first measurement signal and the second measurement signal each representing a force ($F_1$, $F_2$), in particular a bearing force, or a value derived therefrom, wherein the apparatus (330) has the following features:

an interface for reading a braking torque ($M_B$) determined by an apparatus according to claim 11; and

a means for determining a braking force ($F_B$) using a predetermined nominal braking torque and the read braking torque ($M_B$), in order to trigger a braking signal (340).

13. Computer program with program code for carrying out a method (600, 700) according to one of claims 1 to 10 if the computer program is run on an apparatus (310, 330).

**Revendications**

1. Procédé (600) de détermination d'un couple ($M_b$) de freinage sur un système (100) de freinage d'un véhicule ferroviaire, dans lequel le système (100) de freinage, associé à au moins une roue ou à au moins un essieu, a, pour la production d'une force ($F_b$) de freinage sur un signal (340) de freinage au moins un disque (102) de frein, au moins une garniture (104) de frein coopérant avec le disque (102) de frein, ainsi qu'un étrier (106) de frein relié à la garniture (104) de frein, ainsi qu'une enveloppe (108) de frein, l'étrier (106) de frein étant monté avec une enveloppe de frein sur au moins un premier point (110) de palier et un deuxième point (112) de palier, le deuxième point (112) de palier étant mis à une distance (A) de palier définie à l'avance du premier point (110) de palier, un premier capteur (116) pour disposer d'un premier signal de mesure et au moins un deuxième capteur (118) pour disposer d'un deuxième signal de mesure étant montés sur le système (100) de freinage, le premier signal de mesure et le deuxième signal de mesure représentant chacun une force ($F_1$, $F_2$), notamment une force de palier ou une grandeur qui s'en déduit, le procédé (600) ayant les stades suivants :

lecture (610) du premier signal de mesure et du deuxième signal de mesure ; et

détermination (620) d'un couple ($M_b$) de freinage, en utilisant une dimension ($X_0$) de montage de la distance (A) entre palier,

ainsi que du premier signal de mesure et du deuxième signal de mesure, la dimension ($X_0$) de montage correspondant à la distance entre un axe (122) de rotation du disque (102) de frein et le premier point (110) de palier.

2. Procédé (600) suivant la revendication 1, dans lequel, dans le stade de la lecture (610), on lit un premier signal de mesure, qui représente une première force ($F_1$) de palier, associée au premier point (110) de palier, et dans lequel on lit un deuxième signal de mesure, qui représente une deuxième force ($F_2$) de palier, associée au deuxième point (110) de palier.

3. Procédé (600) suivant l'une des revendications précédentes, dans lequel, dans le stade de la détermination (620), on détermine une force ($F_r$) de frottement, en utilisant le premier signal de mesure et le deuxième signal de mesure.

4. Procédé (600) suivant l'une des revendications précédentes, dans lequel, dans le stade de la lecture (610), on lit un premier et un deuxième signal de mesure, le premier signal de mesure et le deuxième signal de mesure représentant chacun une déformation du système (100).

5. Procédé (600) suivant la revendication 4, dans lequel, dans le stade de la détermination (620), on détermine une force de pression de la garniture (104) de frein sur le disque (102) de frein, en utilisant le premier signal de mesure et le deuxième signal de mesure, notamment lorsque le disque (102) de frein ne se trouve pas en rotation et, à l'arrêt, aucune force ($F_r$) de frottement n'est transmise.

6. Procédé (600) suivant l'une des revendications précédentes, dans lequel, dans le stade de la détermination, on détermine un rayon (R) de frottement, en utilisant la dimension ($X_0$) de montage, la distance (A) entre palier, ainsi que le premier signal de mesure et le deuxième signal de mesure, notamment dans lequel le rayon (R) de frottement représente une distance entre un axe (122) de rotation de la roue et un point (124) d'attaque, qui s'ensuit, de la garniture (104) de frein sur le disque (102) de frein.

7. Procédé (600) suivant l'une des revendications précédentes, dans lequel, dans le stade de la lecture (610), on lit une information sur une variation ($X_0+\Delta X$) de longueur de la dimension ($X_0$) de montage et/ou une information sur la variation ($\Delta Y$) d'une position d'un axe (122) de la roue dans une plage de tolérance perpendiculairement à la direction dans laquelle s'étend la dimension ($X_0$) de montage et dans lequel, dans le stade de la détermination (620), on détermine le couple ($M_b$) de freinage et/ou la course ($F_r$) de frottement et/ou le rayon (R) de frottement, en utilisant l'information sur une variation ($X_0+\Delta X$) de longueur et/ou l'information sur une variation ($\Delta Y$) d'une position.

8. Procédé (700) d'émission d'un signal (340) de freinage pour une force ($F_b$) de freinage sur un système (100) de freinage d'un véhicule ferroviaire, dans lequel le système (100) de freinage, associé à au moins une roue ou à au moins un essieu, comprend, pour la production d'une force ($F_b$) de freinage sur un signal (340) de freinage, au moins un disque (102) de frein, au moins une garniture (104) de frein coopérant avec le disque (102) de frein, ainsi qu'un étrier (106) de frein, relié à la garniture (104) de frein, l'étrier (106) de frein étant monté avec une enveloppe (108) de frein en au moins un premier point (110) de palier et un deuxième point (110) de palier, le deuxième point (112) de palier étant mis à une distance de palier définie à l'avance du premier point (110) de palier, dans lequel sur l'étrier (106) de frein, sont montés un premier capteur (116) pour disposer d'un premier signal de mesure et un deuxième capteur (118) pour disposer d'un deuxième signal de mesure, le premier signal de mesure et le deuxième signal de mesure représentant chacun une force ($F_1$, $F_2$), notamment une force de palier, ou une grandeur qui s'en déduit, dans lequel le procédé (700) a les stades suivants :

lecture (710) d'un couple ($M_b$) de freinage, qui a été déterminé par l'exécution des stades d'un procédé (600) suivant l'une des revendications précédentes, et

détermination (720) d'une force ($F_b$) de freinage, en utilisant un couple de freinage de consigne déterminée à l'avance et le couple ($M_b$) de freinage, qui a été lu, afin d'émettre un signal (340) de freinage.

9. Procédé (700) suivant la revendication 8, dans lequel, dans le stade de la détermination, on détermine la force ($F_b$) de freinage, en utilisant une force ($F_r$) de frottement.

10. Procédé (700) suivant l'une des revendications 8 à 9, dans lequel, dans le stade de la détermination (720), on détermine la force ($F_b$) de freinage, en utilisant un rayon (R) de frottement.

11. Système (310) de détermination d'un couple ($M_b$) de freinage sur un système (100) de freinage d'un véhicule ferroviaire, le système (100) de freinage, associé à au moins une roue ou à au moins un essieu, comprenant, pour la production d'une force ($F_b$) de freinage sur un signal (340) de freinage, au moins un disque de frein, au moins une garniture (104) de frein coopérant avec le disque (102) de frein, ainsi qu'un étrier (106) de frein relié à la garniture (104) de frein, l'étrier (106) de frein étant par une enveloppe (108) de frein monté sur au moins l'un d'un premier point (110) de palier et d'un deuxième point (112) de palier, le deuxième point (112) de palier étant mis à une distance de palier définie à l'avance du premier point (110) de palier, dans lequel sur l'enveloppe (108) de frein ou entre celle-ci et une console (114) sont montés un premier capteur (116) pour disposer d'un premier signal de mesure et un deuxième capteur (118) pour disposer d'un deuxième signal de mesure, le premier signal de mesure et le deuxième signal de mesure représentant chacun une force ($F_1$, $F_2$), notamment une force de palier, ou une grandeur qui s'en déduit, le système (310) ayant les caractéristiques suivants :

une interface (300) de lecture du premier signal de mesure et du deuxième signal de mesure, et un dispositif (320) de détermination d'un couple de freinage, en utilisant une dimension ($X_0$) de montage, la distance (A) entre palier, ainsi que le premier signal de mesure et le deuxième signal de mesure, la dimension ($X_0$) de montage correspondant à la distance entre un axe (122) de rotation du disque (102) de frein et le premier point de palier.

12. Système (330) d'émission d'un signal (340) de freinage pour une force ($F_b$) de freinage sur un système (100) de freinage d'un véhicule ferroviaire, le système (100) de freinage, associé à au moins une roue ou à au moins un essieu, comprenant, pour la production d'une force ($F_b$) de freinage sur un signal (340) de freinage, au moins un disque de frein, au moins une garniture (104) de frein coopérant avec le disque (102) de frein, ainsi qu'un étrier (106) de frein relié à la garniture (104) de frein, l'étrier (106) de frein étant, par une enveloppe (108) de frein, monté en au moins un premier point (110) de palier et un deuxième point (112) de palier, le deuxième point (112) de palier étant mis à une distance (A) de palier définie à l'avance du premier point (110) de palier, dans lequel sur l'étrier (106) de frein sont montés un premier capteur (116) pour disposer d'un premier signal de mesure et un deuxième capteur (118) pour disposer d'un deuxième signal de mesure, le premier signal de mesure et le deuxième signal de mesure représentant chacun une force ($F_1$, $F_2$), notamment une force de palier, ou une grandeur qui s'en déduit, le système (300) ayant les caractéristiques suivants :

une interface de lecture d'un couple ($M_b$) de freinage déterminé par un système suivant la revendication 11, et un dispositif de détermination d'une force ($F_b$) de freinage, en utilisant un couple de freinage de consigne déterminé à l'avance et le couple ($M_b$) de freinage lu afin de commander un signal (340) de freinage.

13. Programme d'ordinateur ayant un code de programme pour effectuer un procédé (600, 700) suivant l'une des revendications 1 à 10, lorsque le programme d'ordinateur est réalisé sur un système (310, 330).

Fig. 1

Fig. 2

Fig. 3a

Fig. 3b

Fig. 3c

Fig. 4a

19

Fig. 4b

Fig. 5

600

610

620

## Fig. 6

700

710

720

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009118350 A2
- WO 2010069520 A
- EP 0777598 B1
- DE 4425598 C